# EUROPEAN PATENT SPECIFICATION

(11) **EP 2 105 518 B1**
(45) Date of publication and mention of the grant of the patent: **11.10.2017**
(21) Application number: 09004187.2
(22) Date of filing: 24.03.2009
(51) Int. Cl.: C23C 30/00, C22C 21/00, C22C 21/02, C22C 21/04, F16C 33/06, F16C 33/12

(54) **SLIDING BEARING**
GLEITLAGER
ROULEMENT COULISSANT

(30) Priority: 25.03.2008 JP 2008078115
(43) Date of publication of application: 30.09.2009
(73) Proprietor: Daido Metal Company Ltd., Nagoya (JP)
(72) Inventor: Kagohara, Yukihiko, Inuyama-shi Aichi (JP); Hoshina, Takeshi, Inuyama-shi Aichi (JP); Nirasawa, Tomoyuki, Inuyama-shi Aichi (JP)
(74) Representative: Beckmann, Claus

(56) References cited:
- EP-A1- 1 624 081
- GB-A- 2 391 913
- US-B1- 6 517 954
- J. VETRANO ET AL: "Influence of the particle size on recrystallization and grain growth in Al-Mg-X alloys" MATERIALS SCIENCE AND ENGINEERING, no. A238, 1 October 1997 (1997-10-01), pages 101-107, XP002604335

## Description

### Technical Field

The present invention relates to a sliding bearing comprising a back metal layer, an intermediate layer of an Al-base alloy, and an Al-base bearing alloy layer.

### Technical Background

In general, a sliding bearing with a liner of an Al-base bearing alloy, which sliding bearing is referred to as an Al bearing, is produced by bonding an Al-base bearing alloy layer with a back metal layer via an intermediate layer of an Al-base alloy to form a bimetal and subsequently machining the bimetal.

Such an Al bearing has comparatively good initial conformability, excellent fatigue resistance and wear resistance properties under a high specific load, so that it has been used as bearings in high power engines of motor vehicles or general industrial machines.

In recent years, however, there is a need for sliding bearings having higher fatigue resistance under higher specific load as higher-performance engines have been developed.

JP-A-2000-17363 discloses a sliding bearing having improved fatigue resistance property. While the sliding bearing comprises an Al-base bearing alloy layer of an Al-Sn-Si system alloy, Cr and Zr are further added in the Al-Sn-Si system bearing alloy. According to JP-A-2000-17363, additive Cr and Zr in the Al-Sn-Si system bearing alloy causes an Al-Cr binary intermetallic compound to precipitate at Al grain boundaries of the Al-base bearing alloy layer and an Al-Zr binary intermetallic compound to precipitate at sub-boundaries in Al grains whereby improving fatigue resistance property of the sliding bearing.

US 6,517,954 B1 describes an aluminium alloy, in particular for a layer of a friction bearing, for example, which, apart from aluminium and smelt-related impurities, additionally contains soft-phase formers, e.g. Sn, Pb, Bi, Sb or similar. The alloy contains added quantities of at least one element from the group of elements consisting of Sc, Y, Hf, Nb, Ta, La, lanthanides and actinides in a maximum of 10% by weight, preferably 4% by weight, in particular between 0.015% by weight and 3.25% by weight, relative to 100% by weight of alloy, the remainder being aluminium with smelt-related impurities.

J. Vetrano et al. (MATERIALS SCIENCE AND ENGINEERING, no. A238, pages 101 - 107 (1997-10-01)) describe the influence of the particle size on recrystallization and grain growth in Al-Mg-X alloys.

EP 1 624 081 A1 describes an aluminum alloy for coating tribologically stressed surfaces which comprises soft and hard phases dispersed in an aluminum matrix, where the hard phase comprises one or more elements E1 or carbides, silicides, nitrides or borides of E1 or intermetallic compounds of E1 or intermetallic compounds of aluminum and E1 and the soft phase comprises one or more elements E2. The average particle diameter of the soft phase is no more than 3 µm. Aluminum alloy for coating tribologically stressed surfaces comprises soft and hard phases dispersed in an aluminum matrix, where the hard phase comprises one or more elements E1 (chromium, iron, cobalt, copper, manganese, nickel, molybdenum, magnesium, niobium, platinum, scandium, silver, silicon, vanadium, tungsten, zirconium) or carbides, silicides, nitrides or borides of E1 or intermetallic compounds of E1 or intermetallic compounds of aluminum and E1 and the soft phase comprises one or more elements E2 (silver, aluminum, gold, bismuth, graphite, calcium, copper, indium, magnesium, lead, palladium, platinum, scandium, tin, yttrium, zinc, lanthanides). The soft phase and/or hard phase is finely dispersed in the aluminum matrix and at least 80% of the soft phase has an average particle diameter of no more than 3 µm.

GB 2 391 913 A describes a multi-layered bearing which comprises a steel back layer, an intermediate Al alloy layer and an Al-base bearing alloy layer which contains one or more elements selected from the group of Cu, Zn, Mg and Si, and which is bonded to the steel back layer via the intermediate Al alloy layer. The bearing is subjected to solution treatment at a temperature of not lower than 400°C. The intermediate Al alloy layer has a sub-layer being in direct contact with the steel back layer, and at least one sub-layer positioned closer than the former sub-layer to the Al-base bearing alloy layer. The former sub-layer consists of an Al alloy containing 2 to 8 mass% Si, and has a thickness proportion of 5 to 25% to the entire thickness of the intermediate Al alloy layer. Preferably the former sub-layer has a thickness of not more than 2 µm. The former sub-layer may also contain one or more of Cu, Zn and Mg in a total amount of 0.01-7.0 mass %, Mn, V, Mo, Cr, Co, Fe, Ni and W in a total amount of 0.01-3.0 mass% or B, Ti and Zr in a total amount of 0.01-2.0 mass %.

### Brief summary of the invention

In recent years, there have been made many endeavors in weight reduction of internal combustion engines, whereby there has been also made an attempt of thickness reduction of bearing housings into which sliding bearings for a connecting rod, for example, are incorporated. When the bearing housing is reduced in thickness, the bearing housing becomes less rigid so as to be readily deformed. Thus, there is a problem that a deformation of the bearing housing is caused by dynamic load exerted from a shaft being supported by a sliding bearing whereby the sliding bearing is liable to be deformed resulting in fatigue. A sliding bearing used under such an environment that it suffers repeating bending stress is required to have high bending fatigue strength. Although the Al-base bearing alloy layer disclosed in JP-A-2000-17363 is satisfactory in strength and ductility, it has a problem that when it suffers repeating bending stress, it is liable to be plastically deformed resulting in an early fatigue state.

The present invention was achieved under such a technical background.

Thus, an object of the present invention is to provide a sliding bearing having excellent fatigue resistance property under a high specific load.

The present inventor intensively performed experiments and found a cause why the Al-base bearing alloy layer disclosed in JP-A-2000-17363 is liable to be plastically deformed. In the Al-base bearing alloy layer shown in the patent publication, an Al-Cr intermetallic compound precipitates at grain boundaries in the matrix, and an Al-Zr intermetallic compound precipitates at sub-boundaries in crystal grains. The inventor found that when the Al-base bearing alloy suffers repeating bending stress, the Al-Cr and Al-Zr intermetallic compounds separate from the matrix whereby making those impossible to prevent the Al-base bearing alloy from plastic deformation resulting in a fatigue state of the alloy.

Considering a cause of the separation, the inventor supposed that the cause is weakness of connection between the intermetallic compounds and the matrix. On the basis of such a supposition, the inventor performed an experiment according to which two or more metal elements were added into the Al-base bearing alloy so as to form hypercomplex intermetallic compounds with the metal elements, and concluded that the hypercomplex intermetallic compounds are hard to separate from the matrix because of strong combination of the intermetallic compounds with the matrix. In this respect, the inventor found that it is required for the hypercomplex intermetallic compounds to have a small grain size and are dispersed with a density larger than a given value in order to prevent occurrence of plastic deformation of the alloy by strong combination of the intermetallic compounds and the matrix.

The present invention was achieved on the basis of the diligent experiments, and is directed to a sliding bearing comprising a back metal layer, an intermediate layer of an Al-base alloy, and an Al-base bearing alloy layer, wherein the Al-base bearing alloy layer contains grains of an intermetallic compound consisting of Al and at least two other elements, wherein the grains comprises relatively smaller size grains each having a grain size of less than 0.5 µm, and wherein the smaller size grains are dispersed in the Al-base bearing alloy layer with a density of not less than eight grains per 1 µm² in a sectional area of the Al-base bearing alloy layer wherein the Al-base bearing alloy layer consists of, by mass, 3 to 20% Sn, 1.5 to 8% Si, 0.01 to 3% in total of at least two metal elements selected from the group consisting of Mn, V, Mo, Cr, Co, Fe, Ni, W, Ti and Zr, optionally at least one element selected from the group consisting of Cu, Zn and Mg in a total amount of 0.1 to 7 mass%, and the balance of Al and unavoidable impurities.

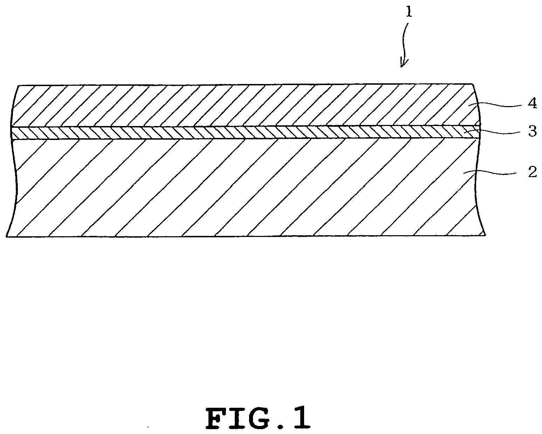

Fig. 1 shows a typical structure of the invention sliding bearing. The sliding bearing 1 shown in Fig. 1 has a three-layer structure consisting of a back metal layer 2 made of, steel for example, an intermediate layer 3 of an Al-base alloy on the back metal layer 2, and an Al-base bearing alloy layer 4 bonded to the back metal layer 2 via the intermediate layer 3.

When at least two elements are added to the Al-base bearing alloy layer, the elements not only form a hypercomplex intermetallic compound with Al but also independently disperse in the Al matrix. Since the constituent elements of the hypercomplex intermetallic compound other than Al are dispersed in the Al matrix, the bonding strength between the hypercomplex intermetallic compound and the matrix increases. Therefore, even repeating bending force acts on the Al-base bearing alloy layer, the hypercomplex intermetallic compound is hard to leave from the Al-base bearing alloy layer, and plastic deformation is hard to occur, whereby the Al-base bearing alloy layer is improved in bending fatigue strength. The constituent elements of the hypercomplex intermetallic compound other than Al are selected from the metal elements of Mn, V, Mo, Cr, Co, Fe, Ni, W, Ti and Zr. When Mn and V are selected, for example, the elements and Al form a hypercomplex intermetallic compound of Al-Mn-V, and Mn and V are independently present in the Al matrix.

The hypercomplex intermetallic compound effectively serves to prevent plastic deformation of the Al matrix in the case where grains of the intermetallic compound comprises relatively smaller size grains each having a grain size of less than 0.5 µm, and the smaller size grains are dispersed in the Al-base bearing alloy layer with a density of not less than eight grains per 1 µm² in a sectional area of the Al-base bearing alloy layer. In the case of such an intermetallic compound having a smaller size grain density of not less than eight grains per 1 µm², the Al matrix can be improved in toughness without deterioration in the property of elongation of the Al matrix.

An Al bearing is produced through the processes of casting, rolling, roll-bonding, heat treatment (i.e. annealing) and machining in this order. In the casting process, the Al-base bearing alloy is melted and cast to obtain a plate. The cast plate of the Al-base bearing alloy is rolled in the rolling process, and bonded under pressure to a steel plate (i.e. a back metal layer) via an interposed thin Al-base alloy plate (i.e. an intermediate layer of the Al-base alloy) in the roll-bonding process to form a bearing forming plate. The bearing forming plate is annealed, and finally machined to form a semi-cylindrical or cylindrical bearing. In such producing processes, fine intermetallic compound grains each having a size of smaller than 0.5 µm are precipitated through the rolling process after casting the Al-base bearing alloy and the annealing process for the bearing forming plate. The sliding bearing with such an Al-base bearing alloy layer has an excellent property of fatigue resistance under a high specific load.

According to one embodiment of the present invention, preferably the Al-base bearing alloy layer has a Vickers hardness of from not less than 50 HV to less than 80 HV, and the intermediate layer has a Vickers hardness of 0.9 to 1.2 times Vickers hardness of the Al-base bearing alloy layer.

The Al-base bearing alloy layer can be made to have a Vickers hardness of not less than 50 HV whereby making it hard to become a state of fatigue even under high operational load in the case where the Al-base bearing alloy layer is applied to a high power engine. Further, it is possible for the Al-base bearing alloy layer to have good conformability by providing the Al-base bearing alloy layer with a Vickers hardness of less than 80 HV. On the other hand, preferably the intermediate layer of the Al-base alloy is made to have a Vickers hardness of not less than 0.9 times Vickers hardness of the Al-base bearing alloy layer whereby enabling the intermediate layer to withstand a high load exerted thereon through the Al-base bearing alloy layer, and preventing it from protrusion deformation over axial ends of the sliding bearing resulting in improved fatigue resistance property of the overall sliding bearing. Further, preferably the intermediate layer of the Al-base alloy is made to have a Vickers hardness of not more than 1.2 times Vickers hardness of the Al-base bearing alloy layer whereby providing the intermediate layer with a cushioning property for variational load exerted on the Al-base bearing alloy layer thereby maintaining conformability of the Al-base bearing alloy layer.

The Al-base bearing alloy layer may contain grains of at least one of Si and an intermetallic compound consisting of Al and at least Si. The grains of intermetallic compound consisting of Al and at least Si, as well as the Si grains, exhibit an lapping effect for a mating shaft surface whereby improving the Al-base bearing alloy layer in seizure resistance property. Si dissolves into the matrix, or is crystallized as hard Si grains to strengthen the Al-base bearing alloy layer whereby improving it in fatigue resistance property.

According to the present invention, the Al-base bearing alloy layer consists of, by mass,
3 to 20% Sn,
1.5 to 8% Si,
0.01 to 3% in total of at least two metal elements selected from the group consisting of Mn, V, Mo, Cr, Co, Fe, Ni, W, Ti and Zr,
optionally at least one element selected from the group consisting of Cu, Zn and Mg in a total amount of 0.1 to 7 mass%, and
the balance of Al and unavoidable impurities.

Not less than 3 mass% of additive Sn can improve the Al-base bearing alloy layer in the surfacial performance including aniti-seizure property, conformability and embeddability for foreign matters, which surfacial performance is needed for the sliding bearing. When the Sn content is not more than 20 mass%, the Al-base bearing alloy layer can withstand a high surfacial load.

Not less than 1.5 mass% of additive Si in the Al-base bearing alloy layer enables the Si function mentioned above to fully exhibit. By making the Si content to be not more than 8 mass%, it is possible to maintain good fatigue resistance property of the Al-base bearing alloy layer.

With regard to at least two metal elements selected from the group consisting of Mn, V, Mo, Cr, Co, Fe, Ni, W, Ti and Zr as mentioned above, an addition of the additive elements are advantageous since they combine with Al to form a ternary intermetallic compound (or a hypercomplex intermetallic compound). By making the total content of at least two of the above additive elements to be not less than 0.01 mass%, it is possible to form a much amount of the above intermetallic compound. It is possible to maintain good fatigue resistance property of the Al-base bearing alloy layer by making the total content of at least two of the above additive elements to be not more than 3 mass%.

The Al-base bearing alloy layer may contain at least one element selected from the group consisting of Cu, Zn and Mg in a total amount of 0.1 to 7 mass%.

The at least one element selected from the group consisting of Cu, Zn, and Mg dissolves into the Al matrix to strengthen the Al matrix. This effect can be satisfactorily brought out by making the total amount of the at least one element to be not less than 0.1 mass%. By making the total amount of the at least one element to be not more than 7 mass%, it is possible to maintain good conformability of the Al-base bearing alloy.

Further, the intermediate layer of the Al-base alloy may contain at least two elements selected from the elements contained in the Al-base bearing alloy layer, wherein the content of each of the at least two elements contained in the Al-base bearing alloy layer is 50 to 150% of the content of the corresponding element in the Al-base bearing alloy layer.

With use of the above intermediate layer of the Al-base alloy, it may have almost the same Young's modulus as that of the Al-base bearing alloy layer whereby making it possible to prevent occurrence of excessive strain in each of the Al-base bearing alloy layer and the intermediate layer even when a bending force is exerted on the sliding bearing, so that it is possible to prevent occurrence of cracks due to fatigue.

### Brief Description of the Drawing

Fig. 1 is a cross-sectional view of one embodiment of the invention sliding bearing.

### Detailed description of the invention

### Example

In order to confirm the advantageous effects of the present invention, the inventors prepared specimens which are of Invention Specimen Nos. 1 to 5, and Comparative Specimen Nos. 1 to 5 as conventional examples (see Table 1), and conducted a tensile test, a bending-fatigue test, and bearing-fatigue test.

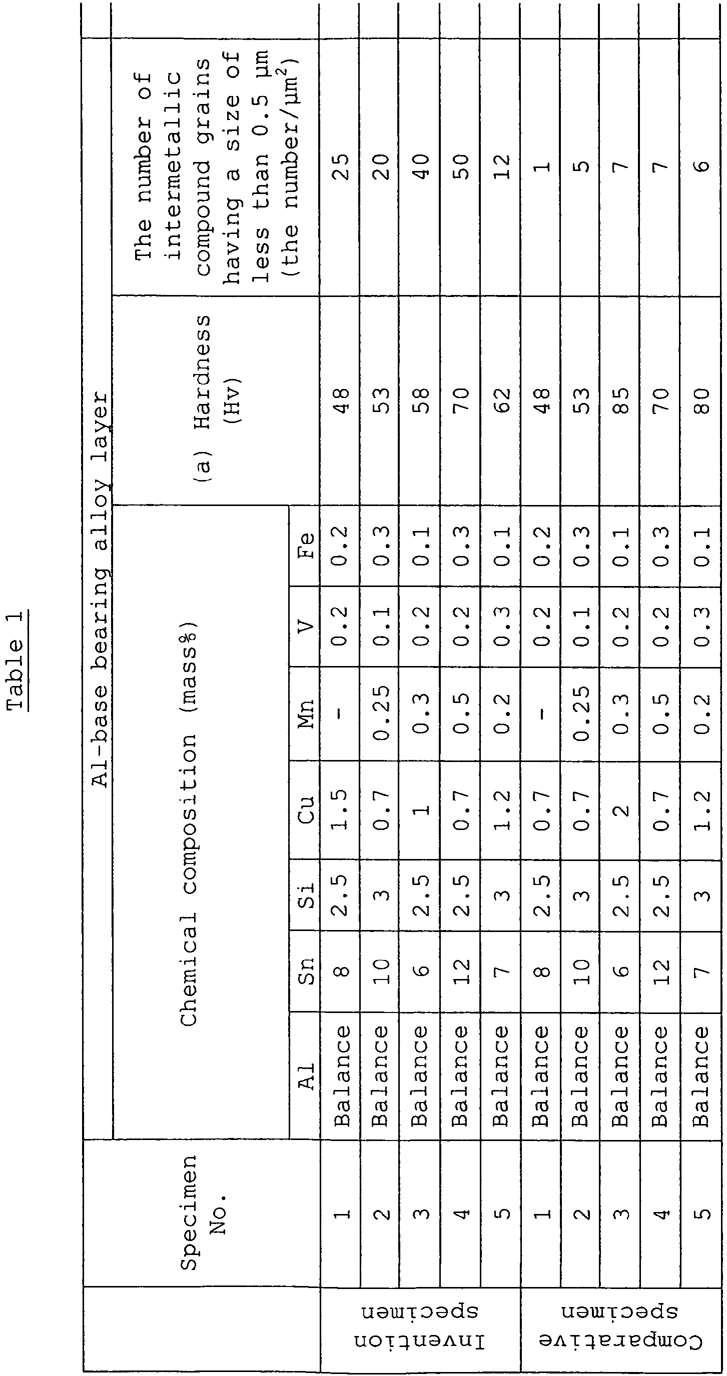

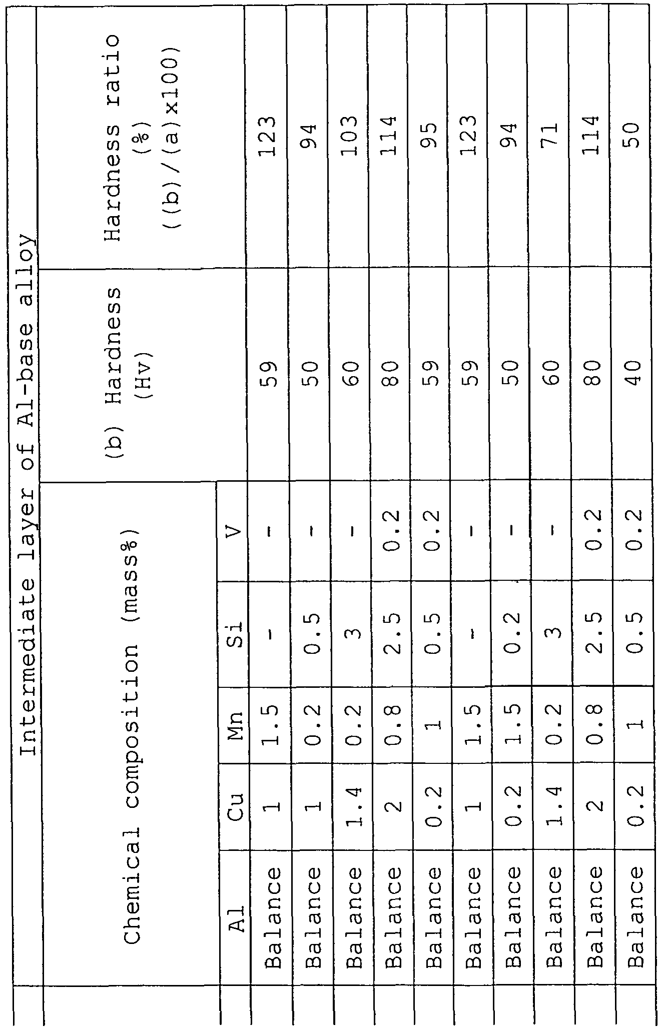

The Invention Specimen Nos. 1 to 5 were produced, respectively, as follows:
(1) A plate of Al-base bearing alloy was produced by means of a belt type casting apparatus having excellent mass-productivity.
(2) The cast plate and a thin plate of Al-base alloy, which is finally made to be an intermediate layer, were bonded with each other by roll-bonding to produce an Al alloy double layers.
(3) The Al alloy double layers plate was bonded to a steel plate as a back metal layer for obtaining a sliding bearing.
(4) The blank plate was subjected to annealing at a temperature of from higher than 350°C to not higher than 400°C for several hours.
(5) The annealed blank plate was machined to produce semi-cylindrical bearings as specimens.

When annealing the above blank plate, intermetallic compounds precipitate in an Al matrix of the Al-base bearing alloy. In the case of the alloy compositions as shown in Table 1, a primal component of the thus precipitated intermetallic compounds is a ternary intermetallic compound of Al-Mn-V. Analyzing a grain size of the intermetallic compounds with use of electron microscopic photographs each showing a metal structure, a number of grains of the intermetallic compounds each having a grain size of less than 0.5 µm were confirmed, which numbers of grains per 1 µm² in a sectional area of the respective specimen are shown in Table 1. The term "grain size" is defined as a maximum length of a piece of crystal grain of the intermetallic compound which was confirmed by analysis of the electron microscopic photograph.

On the other hand, Comparative Specimen Nos. 1 to 5 were prepared by a somewhat different manner. For example, an annealing temperature for blank plates was lower than that of the Invention Specimens, which was 300°C to 350°C, for example. In Al-base bearing alloy layers of the thus prepared comparative specimens, although the intermetallic compound of Al-Mn-V could be confirmed, the numbers of grains of the intermetallic compound each having a grain size of less than 0.5 µm were small as shown in Table 1.

The thus prepared Invention Specimen Nos. 1 to 5 and Comparative Specimen Nos. 1 to 5 were subjected to the following tests of a tensile test, a bending-fatigue test and a bearing-fatigue test.

### (1) Tensile test

The above blank plates after annealing were machined to remove those back metal layers, respectively, to obtain Al alloy bimetal plates each consisting of an Al-base bearing alloy layer and an Al-base alloy intermediate layer. From these, JIS No. 5 test pieces were prepared. The JIS No. 5 test pieces were subjected to a tensile test. A test result is shown in Table 2.

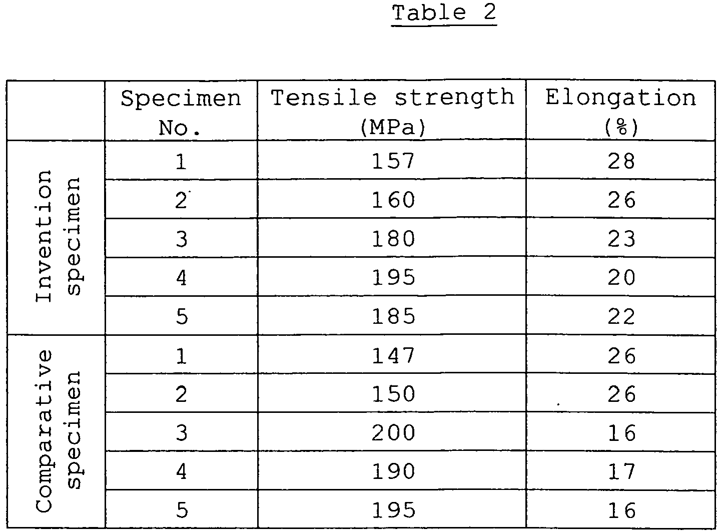

### (2) Bending-fatigue test

The above blank plates after annealing were machined to prepare test pieces. These test pieces were subjected to a bending-fatigue test. The test piece had a total thickness of 1.5 mm, a thickness of the back metal layer of 1.2 mm, and a thickness of the Al-base bearing alloy layer of 0.3 mm. In the test, a reciprocal bending deformation was provided cyclically, such that continuous strain occurs throughout the surface of the Al-base bearing alloy layer by bending, until a crack occurs in the surface. A test result is shown in Table 3.

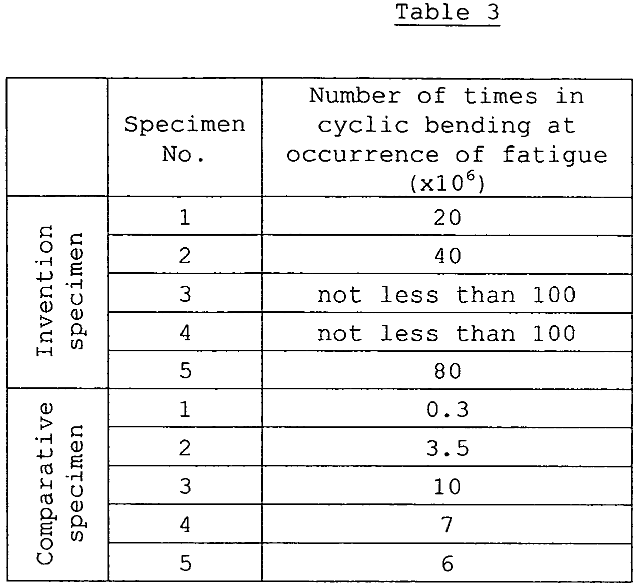

### (3) Bearing-fatigue test

A bearing-fatigue test was conducted with use of the prepared specimens of semi-cylindrical bearings under the conditions shown in Table 4. A test result is shown in Table 5.

**Table 4**

| | Test conditions |
|---|---|
| Peripheral speed | 9.0 m/sec |
| Test time | 20 hours |
| Lubricant oil | VG68 |
| Lubricant oil temperature | 100°C |
| Pressure of supply oil | 0.49MPa |
| Shaft material | JIS S55C |
| Evaluation | Maximum specific load without fatigue |

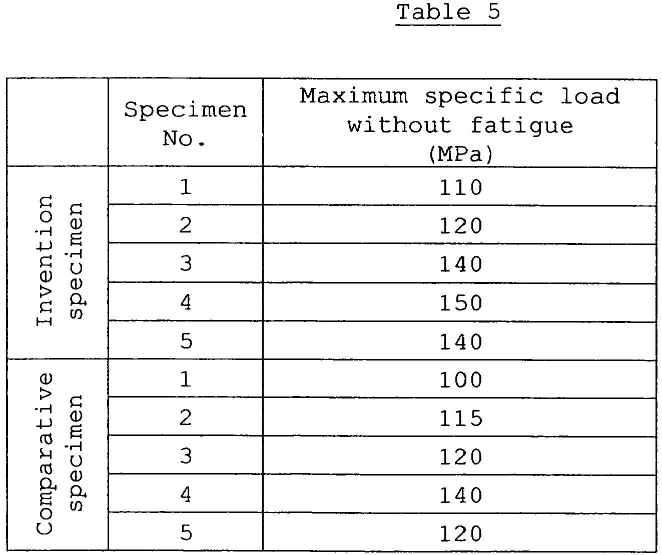

The above test results are analyzed below. The hardness ratio in Table 1 is obtained by dividing a hardness (HV) of (a) the Al-base bearing alloy layer by a hardness (HV) of (b) the intermediate layer of the Al-base alloy and expressing the resultant value in percentage.

Considering the results of the tensile test, it will be appreciated that the Invention Specimen Nos. 1 to 5 are excellent in both the properties of tensile strength and elongation as compared with the Comparative Specimen Nos. 1 to 5.

With regard to Comparative Specimen Nos. 1 and 2, although the elongation is large, the tensile strength is small. Regarding Comparative Specimen Nos. 3 to 5, although the tensile strength is large, the elongation is small.

Considering the above test result, it can be seen that with regard to the number of intermetallic compounds each having a grain size of less than 0.5 µm, such numbers of Invention Specimen Nos. 1 to 5 are greater than those of Comparative Specimen Nos. 3 to 5. Thus, it is believed that Invention Specimen Nos. 1 to 5 are excellent in tensile strength property because the intermetallic compounds restrain the dislocation movement in the Al matrix whereby causing plastic deformation of the alloy to hardly occur.

With regard to the chemical composition of the Al-base bearing alloy layer, Invention Specimen No. 2 is identical to Comparative Specimen No. 2, and Invention Specimen No. 4 is identical to Comparative Specimen No. 4. However, Invention Specimen No. 2 has a larger tensile strength than that of Comparative Specimen No. 2, and Invention Specimen No. 4 has larger tensile strength and larger elongation than those of Comparative Specimen No. 4. This will be because with regard to the number of intermetallic compounds having a grain size of less than 0.5 µm, the numbers of Invention Specimen Nos. 2 and 4 are greater than those of Comparative Specimen Nos. 2 and 4, respectively.

Considering the results of the bending-fatigue test, it will be appreciated that Invention Specimen Nos. 1 to 5 are excellent in bending-fatigue strength property as compared with Comparative Specimen Nos. 1 to 5.

With regard to the number of intermetallic compounds each having a grain size of less than 0.5 µm, the numbers of Invention Specimen Nos. 1 to 5 are larger than those of Comparative Specimen Nos. 1 to 5. It is believed that the intermetallic compounds restrain the dislocation movement in the Al matrix whereby improving bending-fatigue strength of the Invention Specimens.

While Invention Specimen No. 2 and Comparative Specimen No. 2 are identical to each other in the chemical composition of those Al-base bearing alloy layers, the former is excellent in the bending-fatigue strength than the latter. This will be because of the different chemical compositions of the intermediate layers between both of the specimens. In Invention Specimen No. 2, the intermediate layer of the Al-base alloy comprises at least two elements selected from the elements contained in the Al-base bearing alloy layer, and the content of each of the at least two elements contained in the Al-base bearing alloy layer is 50 to 150% of the content of the corresponding element in the Al-base bearing alloy layer. Therefore, the intermediate layer may have generally the same Young's modulus as that of the Al-base bearing alloy layer whereby making it possible to prevent occurrence of excessive strain in each of the Al-base bearing alloy layer and the intermediate layer even when a bending force is exerted on the sliding bearing.

Further, Invention Specimen No. 3 is excellent in bending-fatigue strength than the other Invention Specimens. This will be because the intermediate layer of the Al-base alloy comprises at least two elements selected from the elements contained in the Al-base bearing alloy layer, and the content of each of the elements contained in the Al-base bearing alloy layer is 50 to 150% of the content of the corresponding element in the Al-base bearing alloy layer. Therefore, the intermediate layer may have almost the same Young's modulus as that of the Al-base bearing alloy layer whereby making it possible to prevent occurrence of excessive strain in each of the Al-base bearing alloy layer and the intermediate layer even when a bending force is exerted on the sliding bearing.

Invention Specimen No. 2 has a higher bending-fatigue strength than that of Invention Specimen No. 1.

A first reason of this will be because while the both specimens are generally identical to each other in the amount of intermetallic compounds contained in the Al-base bearing alloy layers, the hardness ratio of Invention Specimen No. 2 is closer to 100% than that of Invention Specimen No. 1 (see Table 1). Namely, in Invention Specimen No. 2, a hardness difference between the Al-base bearing alloy layer and the intermediate layer is smaller than that of Invention Specimen No. 1.

A second reason of this will be because there was not a significant difference in the Young's modulus between the Al-base bearing alloy layer and the intermediate layer in Invention Specimen No. 2 since a difference in the chemical compositions between the both Al-base bearing alloy layers is small.

With regard to the maximum specific load without seizure in the bearing-fatigue test, Invention Specimen Nos. 1 to 5 have higher values thereof than those of Comparative Specimen Nos. 1 to 5. This will be because the numbers of intermetallic compound grains, each having a grain size of less than 0.5 µm, in the Al-base bearing alloy layers of Invention Specimen Nos. 1 to 5 are larger than those of Comparative Specimen Nos. 1 to 5, and the much grains more effectively restrain the dislocation movement in the Al matrix whereby improving the bending strength.

With regard to the chemical composition of the Al-base bearing alloy layer, Invention Specimen No. 2 is identical to Comparative Specimen No. 2, and Invention Specimen No. 4 is identical to Comparative Specimen No. 4. The maximum specific load without seizure of Invention Specimen No. 2 is higher than that of Comparative Specimen No. 2, and the maximum specific load without seizure of Invention Specimen No. 4 is higher than that of Comparative Specimen No. 4. These will be because of the much amount of intermetallic compounds having a grain size of less than 0.5 µm in the Al-base bearing alloy layers of Invention Specimen Nos. 2 and 4 as compared to Comparative Specimen Nos. 2 and 4, respectively.

The maximum specific load without seizure of Invention Specimen No. 2 is higher than that of Invention Specimen No. 1. This will be because the intermediate layer of the Al-base alloy of Invention Specimen No. 2 is softer than that of Invention Specimen No. 1 resulting in a higher cushioning function of Invention Specimen No. 2 as compare with Invention Specimen No. 1.

With regard to improvement of fatigue resistance of the invention sliding bearing, additive elements of Mo, Cr, Co, Ni, W, Ti and Zr have generally the same effect as the additive elements of Mn, V and Fe used in Invention Specimen Nos. 1 to 5. By using at least two selected from the additive elements of Mo, Cr, Co, Ni, W, Ti and Zr in a total amount of 0.01 to 3 mass% in the Al-base bearing alloy layer, it is possible to prevent occurrence of plastic deformation of the Al-base bearing alloy layer whereby improving the fatigue resistance property of the sliding bearing.

While Cu may be added in the Al-base bearing alloy layer as an element of forming a solid solution, Zn and Mg have generally the same function as Cu. When at least one of Cu, Zn and Mg in a total amount of 0.1 to 7 mass% is added in the Al-base bearing alloy layer, fatigue resistance property thereof is improved.

## Claims

1. A sliding bearing comprising a back metal layer (2), an intermediate layer (3) of an Al-base alloy, and an Al-base bearing alloy layer (4),
wherein the Al-base bearing alloy layer (4) contains grains of an intermetallic compound consisting of Al and at least two other elements,
wherein the grains comprises grains each having a grain size of less than 0.5 µm,
wherein the grains are dispersed in the Al-base bearing alloy layer (4) with a density of not less than eight grains per 1 µm² in a sectional area of the Al-base bearing alloy layer (4),
wherein the Al-base bearing alloy layer (4) consists of, by mass,
3 to 20% Sn,
1.5 to 8% Si,
0.01 to 3% in total of at least two metal elements selected from the group consisting of Mn, V, Mo, Cr, Co, Fe, Ni, W, Ti and Zr,
optionally at least one element selected from the group consisting of Cu, Zn and Mg in a total amount of 0.1 to 7 mass%, and
the balance of Al and unavoidable impurities.

2. The sliding bearing according to claim 1, wherein the Al-base bearing alloy layer (4) has a Vickers hardness of from not less than 50 HV to less than 80 HV, and the intermediate layer has a Vickers hardness of 0.9 to 1.2 times Vickers hardness of the Al-base bearing alloy layer (4).

3. The sliding bearing according to any one of claims 1 and 2, wherein the Al-base bearing alloy layer (4) contains the grains of at least one of Si and an intermetallic compound consisting of Al and at least Si.

4. The sliding bearing according to any one of claims 1 to 3, wherein the Al-base bearing alloy layer (4) comprises at least two elements other than Al, and the intermediate layer (3) of the Al-base alloy comprises at least two elements selected from the elements contained in the Al-base bearing alloy layer (4), and wherein the content of each of the at least two elements contained in the Al-base bearing alloy layer is 50 to 150% of the content of the corresponding element in the Al-base bearing alloy layer (4).

5. The sliding bearing according to any one of claims 1 to 4, the intermetallic compound is precipitated at a temperature of from higher than 350°C to not higher than 400°C.

## Patentansprüche

1. Gleitlager, umfassend eine Stützmetallschicht (2), eine Zwischenschicht (3) aus einer Legierung auf Al-Basis und eine Lagerlegierungsschicht (4) auf Al-Basis,
wobei die Lagerlegierungsschicht (4) auf Al-Basis Körner aus einer zwischenmetallischen Verbindung enthält, die aus Al und mindestens zwei anderen Elementen besteht,
wobei die Körner Körner umfassen, die jeweils eine Korngröße von weniger als 0,5 µm aufweisen,
wobei die Körner verteilt sind in der Lagerlegierungsschicht (4) auf Al-Basis mit einer Dichte von nicht weniger als 8 Körnern pro 1 µm² in einer Querschnittsfläche der Lagerlegierungsschicht (4) auf Al-Basis,
wobei die Lagerlegierungsschicht (4) auf Al-Basis, bezogen auf die Masse, besteht aus:
3 bis 20% Sn,
1,5 bis 8% Si,
insgesamt 0,01 bis 3% von mindestens zwei Metallelementen, ausgewählt aus der Gruppe, bestehend aus Mn, V, Mo, Cr, Co, Fe, Ni, W, Ti und Zr,
optional mindestens einem Element, ausgewählt aus der Gruppe, bestehend aus Cu, Zn und Mg in einer Gesamtmenge von 0,1 bis 7 Masse-% und
zum Rest Al und unvermeidlichen Verunreinigungen.

2. Gleitlager nach Anspruch 1, wobei die Lagerlegierungsschicht (4) auf Al-Basis eine Vickers-Härte von nicht weniger als 50 HV bis weniger als 80 HV aufweist und die Zwischenschicht eine Vickers-Härte vom 0,9- bis 1,2-Fachen der Vickers-Härte der Lagerlegierungsschicht (4) auf Al-Basis aufweist.

3. Gleitlager nach einem der Ansprüche 1 und 2, wobei die Lagerlegierungsschicht (4) auf Al-Basis die Körner von mindestens einem von Si und einer zwischenmetallischen Verbindung, bestehend aus Al und mindestens Si enthält.

4. Gleitlager nach einem der Ansprüche 1 bis 3, wobei die Lagerlegierungsschicht (4) auf Al-Basis mindestens zwei andere Elemente als Al umfasst und die Zwischenschicht (3) aus der Legierung auf Al-Basis mindestens zwei Elemente, ausgewählt aus den Elementen, die in der Lagerlegierungsschicht (4) auf Al-Basis enthalten sind, umfasst, und wobei der Gehalt von jedem der mindestens zwei Elemente, die in der Lagerlegierungsschicht auf Al-Basis enthalten sind, 50 bis 150% des Gehalts des entsprechenden Elements in der Lagerlegierungsschicht (4) auf Al-Basis beträgt.

5. Gleitlager nach einem der Ansprüche 1 bis 4, wobei die zwischenmetallische Verbindung bei einer Temperatur von höher als 350°C bis nicht höher als 400°C ausgefällt worden ist.

## Revendications

1. Roulement coulissant comprenant une couche de métal arrière (2), une couche intermédiaire (3) d'un alliage à base d'Al et une couche d'alliage (4) portant une base d'Al,
dans lequel la couche d'alliage portant la base d'Al (4) contient des grains d'un composé intermétallique d'Al et au moins deux autres éléments,
dans lequel les grains comprennent des grains ayant chacun une taille de grain inférieure à 0,5 µm,
dans lequel les grains sont dispersés dans la couche d'alliage portant la base d'Al (4) avec une densité de pas moins de huit grains par 1 µm² dans une zone de section de la couche d'alliage portant la base d'Al (4),
dans lequel la couche d'alliage portant la base d'Al (4) consiste, en masse, en
3 à 20 % de Sn,
1,5 à 8 % de Si,
0,01 à 3 % au total d'au moins deux éléments métalliques choisis dans le groupe consistant en Mn, V, Mo, Cr Co, Fe, Ni, W, Ti et Zr,
éventuellement au moins un élément choisi dans le groupe consistant en Cu, Zn et Mg en une quantité totale de 0,1 à 7 % en masse, et
le reste d'Al et des impuretés inévitables.

2. Roulement coulissant selon la revendication 1, dans lequel la couche d'alliage portant la base d'Al (4) a une dureté Vickers de pas moins de 50 HV à pas moins de 80 HV, et la couche intermédiaire a une dureté Vickers de 0,9 à 1,2 fois la dureté Vickers de la couche d'alliage portant la base d'Al (4).

3. Roulement coulissant selon l'une quelconque des revendications 1 et 2, dans lequel la couche d'alliage portant la base d'Al (4) contient les grains d'au moins l'un parmi du Si et un composé intermétallique d'Al et au moins Si.

4. Roulement coulissant selon l'une quelconque des revendications 1 à 3, dans lequel la couche d'alliage portant la base d'Al (4) comprend au moins deux éléments autres que l'Al, et la couche intermédiaire (3) de l'alliage à base d'Al comprend au moins deux éléments choisis parmi les éléments contenus dans la couche d'alliage portant la base d'Al (4), et
dans lequel la teneur en chacun des moins deux éléments contenus dans la couche d'alliage portant la base d'Al est de 50 à 150 % de la teneur en l'élément correspondant dans la couche d'alliage portant la base d'Al (4).

5. Roulement coulissant selon l'une quelconque des revendications 1 à 4, le composé intermétallique est précipité à une température de plus de 350 °C à pas plus de 400 °C.
